# EUROPEAN PATENT APPLICATION

(11) **EP 1 367 010 A1**
(43) Date of publication of application: **03.12.2003**
(21) Application number: 02011878.2
(22) Date of filing: 28.05.2002
(51) Int. Cl.: B65G 27/32, B65G 27/24, G05D 19/02

(54) **Parts feeder and control method thereof**

(71) Applicant: YKK CORPORATION, Chiyoda-ku, Tokyo (JP)
(72) Inventor: Takase, Hiroto, Uozu-shi, Toyama-ken (JP); Yagi, Susumu, Shimoniikawa-gun, Toyama-ken (JP)
(74) Representative: Casalonga, Axel

(57) **Abstract**

A vibration element (16) vibrating at a predetermined frequency, a vibrating unit (14) provided with the vibration element (16), a drive circuit (20) for driving the vibration element (16) and a control portion (22) for sending a drive signal to the drive circuit (20) to conduct a predetermined drive are provided. Per a predetermined operation cycle of the vibration element (16), the vibration element (16) is temporarily driven at a frequency different from a normal frequency and a signal sensor for detecting signal wave obtained by the vibration element (16) during vibration period is provided to the control portion (22). The control portion (22) has a phase difference sensor for detecting a phase difference between the vibration signal wave and the drive signal wave of the drive circuit (20) and a vibration controller for controlling the vibration of the vibration element (16) based on the obtained phase difference.

## Description

### FIELD OF THE INVENTION

The present invention relates to a parts feeder for vibrating a bowl etc. that accommodates various parts by vibration of electromagnet or piezoelectric vibrator to feed the parts and control method thereof.

### BACKGROUND OF THE INVENTION

Conventionally, vibrating parts feeder has been used for feeding parts to a production line.

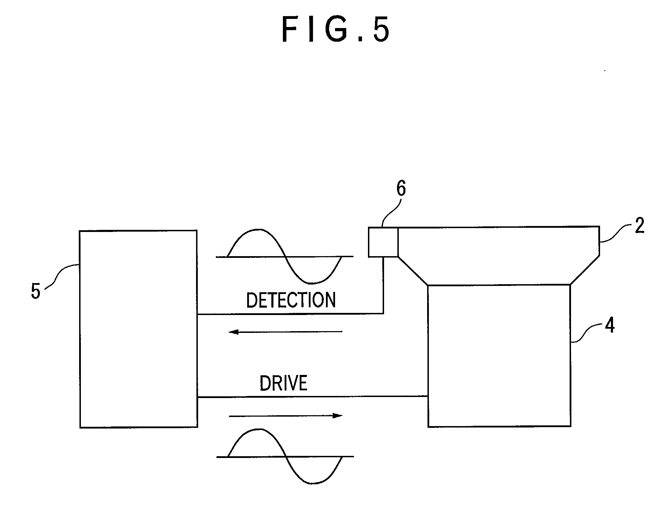

Fig. 5 shows a piezoelectrically vibrating parts feeder as an example of vibrating parts feeder. The piezoelectrically vibrating parts feeder has a bowl 2 as a parts discharger for accommodating the parts to be fed and discharging the parts by vibration, a vibrating unit 4 having a piezoelectric vibrator for driving the bowl 2 at a predetermined frequency, and a controller 5 for controlling the operation of the vibrating unit 4.

In order to appropriately control the vibration of the bowl 2, an amplitude sensor 6 such as photoelectric converter and piezoelectric element is provided to the vibrating parts feeder to electrically detect the amplitude of the bowl 2, the detection signal being fed back to the controller 5 to adjust electric current or voltage for driving the bowl 2, so that the bowl 2 is driven at a constant amplitude.

In another arrangement, a current sensor and a voltage sensor are provided to a drive control circuit such as the controller 5 and the vibration of the bowl 2 is recognized by processing the detection signal from the sensors, so that the vibration of the bowl 2 is appropriately controlled by controlling the operation of the vibrating unit 4 based on the result of the processing (see Japanese Patent Laid-Open Publication No. Hei 7-60187, Japanese Patent Laid-Open Publication No. Hei 10-49237). In such arrangement, there is no need for providing special amplitude sensor to the bowl 2.

However, when the above amplitude sensor is used, the necessity of the amplitude sensor 6 for detecting the vibration of the bowl 2 makes the entire structure complicated and increases the production cost on account of increase in the number of the components and circuits.

Further, in the above method of processing the signal of the drive control circuit, though the amplitude sensor 2 of the bowl 2 is not necessary, additional high-speed processing step etc. is required for detecting the drive control signal etc. to control the vibration of the vibrating unit 4, thereby complicating the controller 5 and increasing production cost.

In order to answer to the above disadvantages, the Applicant of the present invention has proposed still another arrangement, where the drive of the bowl 2 is temporarily suspended (suspending the drive of the vibrating unit 4) and the signal outputted from the piezoelectric vibrator or electromagnet for driving the bowl 2 (in an ordinary arrangement, a signal generated on the terminal for drive electric signal to be inputted) is checked while the vibration of the bowl 2 continues on account of inertia, so that the drive of the vibrating unit 4 is controlled based on the signal.

However, according to the above temporary suspension type, especially when a piezoelectric vibrator is used, an LC circuit is formed by an output transformer and piezoelectric vibrator of the vibrating unit 4 and LC resonance wave can be overlapped on the vibration signal in temporarily suspending the vibration, thereby deteriorating the control accuracy. In order to eliminate the resonance wave, a change such as serially interposing a resistance for absorbing LC resonance energy is required. Further, a damping sound can be generated in some large parts feeder.

Alternatively, when an electromagnet is used in the temporary suspension type, since the electromagnet loses magnetism during suspension, direct current signal has to be flown to the electromagnet in order to obtain induced electromotive force signal by inertial vibration, which is difficult to implement in terms both of technique and production cost.

An object of the present invention is to provide a parts feeder capable of accurate vibration with simple structure and eliminating unnecessary vibration and damp, and control method thereof.

### SUMMARY OF THE INVENTION

A parts feeder (10) according to an aspect of the present invention includes: a vibration element (16) for vibrating a parts discharger (12); a drive circuit (20) for driving the vibration element (16); and a control portion (22) for sending drive signal of a predetermined drive frequency to the drive circuit (20) to vibrate the vibration element (16) at the drive frequency, the parts feeder being characterized in that the control portion (22) ordinarily uses the drive frequency as a normal frequency and changes the drive frequency to a temporary frequency different from the normal frequency per a predetermined operation cycle.

A control method of a parts feeder according to another aspect of the present invention includes: a vibration element (16) for vibrating a parts discharger (12); a drive circuit (20) for driving the vibration element (16); and a control portion (22) for sending drive signal of a predetermined drive frequency to the drive circuit (20) to vibrate the vibration element (16) at the drive frequency, the method characterized in that the drive frequency is ordinarily used as a normal frequency and the drive frequency is changed to a temporary frequency different from the normal frequency per a predetermined operation cycle.

According to the present invention, the drive frequency is ordinarily used as the normal frequency for feeding parts from the parts discharger and the drive frequency is changed to the temporary frequency different from the normal frequency per a predetermined operation cycle, during which the operation control of the parts discharger is adjusted. In other words, though the drive signal is stopped in the above-described conventional temporary suspension type, a drive signal of different frequency is outputted in the present invention. Accordingly, the vibrating element is reversely driven by the parts discharger continuously vibrated by inertia, so that the signal in accordance with vibration of the parts discharger is superposed on the temporary frequency signal applied to the vibrating element. The respective signals can be analyzed by analyzing frequency of the signal on the vibrating element under the condition, so that the signal by the parts discharger continuously vibrated by inertia and the applied temporary frequency signal can be distinguished, thereby allowing adjustment of drive control based on the signal by the parts discharger.

In the parts feeder and control method of the present invention, a signal outputted by the vibration element (16) continuously vibrated by inertia may preferably be detected during drive period at the temporary frequency and the detected signal may preferably be compared with a drive signal outputted by the control portion (22), based on which the vibration of the vibration element (16) is controlled.

For the sake of comparison, a phase difference between a wave of the detected signal and wave of the drive signal wave may preferably be calculated and the vibration of the vibration element (16) may preferably be controlled so that the phase difference becomes a predetermined value.

For instance, when the drive signal switched to the temporary frequency is a frequency of the normal frequency multiplied by integer and the phase of the drive signal is aligned with the signal of the normal frequency, the vibration can be adjusted by adjusting phase relative to the output signal from the vibrating element etc.

As a specific arrangement, the control portion (22) may preferably have a signal sensor (31) for detecting a signal outputted by the vibration element (16) continuously vibrated by inertia, a phase difference sensor (32) for detecting a phase difference between a vibration signal wave obtained by the signal sensor and a drive signal wave from the drive circuit (20), and a vibration controller (33) for controlling the vibration of the vibration element (16) based on the phase difference obtained by the phase difference sensor.

The temporary frequency may preferably be the normal frequency multiplied or divided by integer.

According to the above arrangement, the phase can be aligned with the signal of the normal frequency, thereby enabling adjustment of the amplitude and phase.

The normal frequency may preferably be a resonance frequency of a vibrating portion including the parts discharger (12) and the vibration element (16) or integral multiple thereof.

According to the above arrangement, the parts discharger can be efficiently vibrated and the vibration of the parts discharger by inertia can be continued for a long time in switching into the temporary frequency, thereby securing time for adjustment and conducting accurate and secure control.

In adjusting the parts feeder of the present invention, following specific operation is conducted. The resonance frequency of a parts feeder to be adjusted is measured in advance. In measuring the resonance frequency, the vibrating element is driven by the drive circuit at a frequency different from normal drive frequency per a predetermined cycle. Signal obtained from the vibrating element during the drive period at the temporary frequency is processed by Fourier transform and power spectrum and phase of the vibration signal of the bowl in the analytic data thus obtained is calculated. The obtained vibration signal, phase difference between the signal wave of the vibration signal and the drive signal of the drive circuit and the resonance frequency are stored in a memory, and the vibrating unit is driven at the memorized resonance frequency. Further, the vibrating element is controlled so that the phase difference between the obtained signal wave and the drive signal of the drive circuit becomes the memorized phase difference.

Incidentally, in the present invention, the signal refers to voltage or current. When the signal refers to voltage, the terms including "signal" respectively represent voltage wave, drive voltage, voltage sensor and drive voltage wave. When the signal refers to current, the terms including "signal" respectively represent current wave, drive current, current sensor and drive current wave

### BRIEF DESCRIPTION OF THE DRAWINGS

Fig. 1 is a schematic block diagram showing a piezoelectrically vibrating parts feeder according to an embodiment of the present invention;
Fig. 2 is a flow chart showing control process of the aforesaid embodiment;
Fig. 3 is a graph showing a relationship between resonance frequency and amplitude of the parts feeder of the aforesaid embodiment;
Fig. 4(A) is a graph showing driving wave of a parts feeder of the aforesaid embodiment, Fig. 4(B) is a graph showing a vibration signal obtained by Fourier transform, Fig. 4(C) is a graph showing the drive signal; and
Fig. 5 is a schematic illustration showing control method of a conventional parts feeder.

### DETAILED DESCRIPTION OF EMBODIMENT(S)

An embodiment of the present invention will be described below with reference to attached drawings.

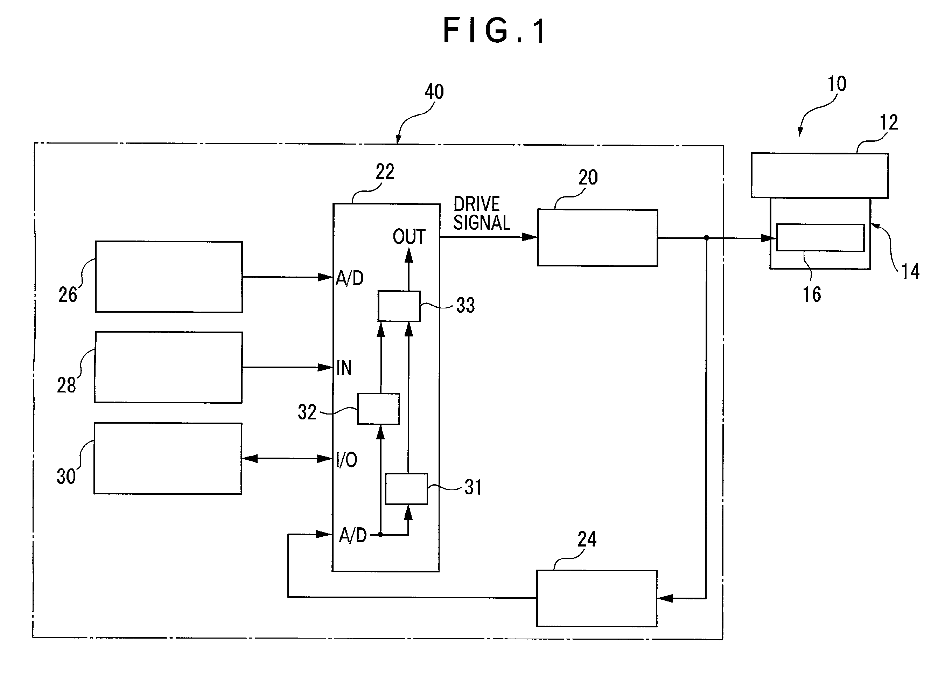

A parts feeder 10 according to the present embodiment is a piezoelectrically vibrating type, which includes a bowl 12 for accommodating, vibrating and discharging various parts, and a piezoelectric vibrating unit 14 for vibrating the bowl 12 as shown in Fig. 1. The piezoelectric vibrating unit 14 has an elastic support (not shown) supporting the bowl 12 and a piezoelectric vibrator 16 as a vibration element for vibrating the bowl 12 through the elastic support. A control unit 40 for driving the piezoelectric vibrator 16 is provided.

The control unit 40 has a drive circuit 20 having a power amplifier etc. connected to the piezoelectric vibrator 16. The drive circuit 20 is connected to an output terminal of a control portion 22 composed of a microcomputer for sending drive signal of the piezoelectric vibrator 16. A voltage sensor 24 is connected to the piezoelectric vibrator 16 for detecting electric voltage generated on electrode of the piezoelectric vibrator, the output of the voltage sensor 24 being connected to A/D conversion input terminal of the control portion 22.

An amplitude setting circuit 26 for adjusting amplitude of the piezoelectric vibrator 16 through the drive circuit 20 is connected to the control portion 22. A mode setting circuit 28 is also connected to the control portion 22 for switching the drive mode of the parts feeder 10 between adjustment mode and operation mode. A nonvolatile memory 30 as a memory element for storing data such as predetermined voltage, phase difference and frequency and inputting and outputting the data to the control portion 22 is further provided.

The control portion 22 has a signal sensor 31 for detecting voltage signal from the voltage sensor 24, a phase difference sensor 32 for detecting phase difference between a vibration signal wave sensed by the signal sensor 31 and a drive signal wave of the drive circuit 20, and a vibration controller 33 for controlling the vibration of the vibrator 16 based on the phase difference obtained by the phase difference sensor 32. The above respective components can be installed as software of a program executed on a microcomputer system constituting the control portion 22. On the other hand, sheer hardware arrangement may be used for achieving the above function.

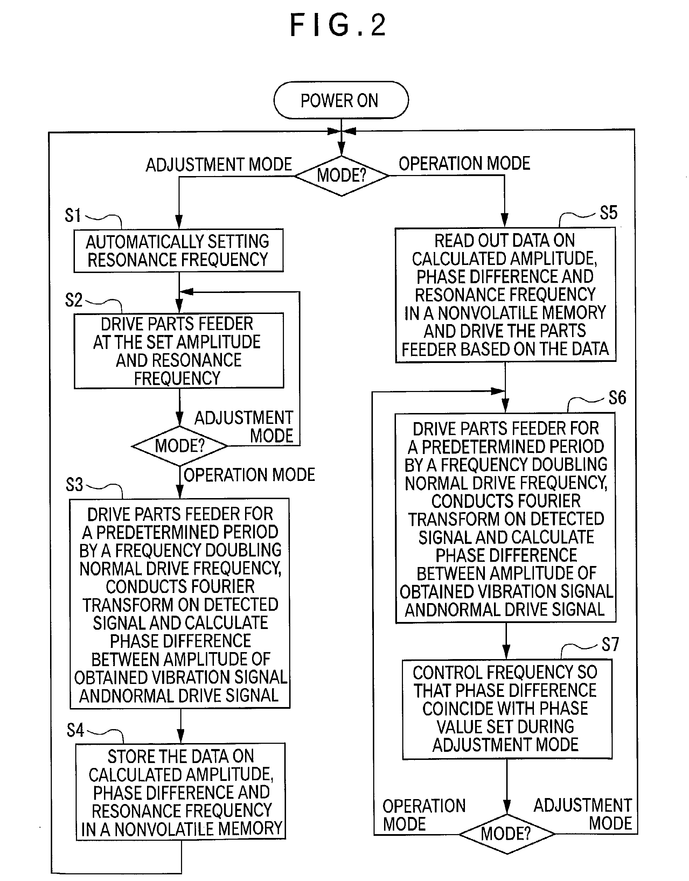

Figs. 2 to 4 show how to drive and control the piezoelectrically vibrating parts feeder 10 according to the present embodiment.

When the parts feeder 10 is driven, the power of the parts feeder 10 is initially turned on and the drive mode of the parts feeder 10 is selected by the mode setting circuit 28.

Ordinarily, resonance frequency of the piezoelectrically vibrating parts feeder 10 is measured in shipping out the piezoelectrically vibrating parts feeder 10 and is stored in the nonvolatile memory 30. On the other hand, when natural frequency of the vibration system is changed by exchanging the bowl 12 or the other component, since the resonance frequency also changes, the resonance frequency is measured and is stored in the nonvolatile memory 30. The adjustment mode is used in conducting the above steps.

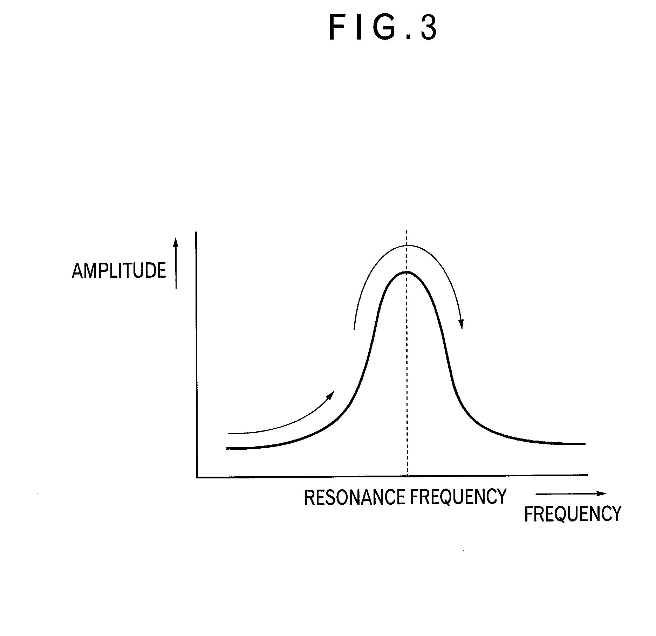

In the adjustment mode, the amplitude of the piezoelectric vibrating unit 14 becomes the maximum at the resonance frequency of the entire unit including the bowl 12 as shown in Fig. 3, the frequency is swept by the drive circuit 20 without changing driving voltage and the frequency having the maximum amplitude is detected to be set as the resonance frequency (step S1 in Fig. 2).

Next, the piezoelectric vibrator 16 is driven by the drive circuit 20 at thus set amplitude and resonance frequency thereof in the same manner as drive condition (step S2 of Fig. 2).

When the parts feeder 10 is switched from the adjustment mode to the operation mode, the parts feeder 10 conducts a predetermined adjustment process and switches to the operation mode.

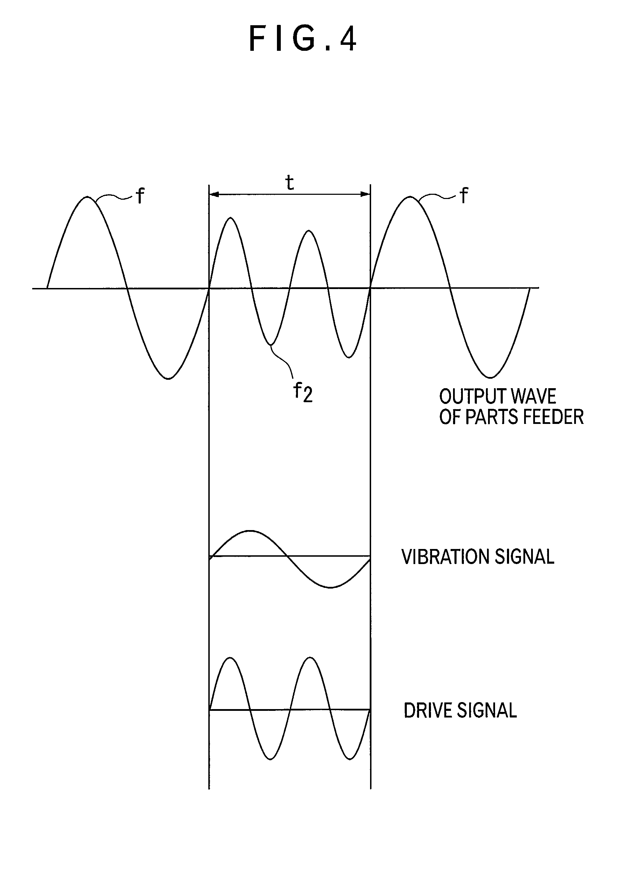

The parts feeder 10 drives the drive circuit 20 at a frequency f₂ doubling an normal drive frequency f for a predetermined period t as shown in Fig. 4(A). The voltage obtained by piezoelectric effect of the piezoelectric vibrator 16 is detected by the voltage sensor 24 and the voltage signal is inputted to the A/D conversion input terminal of the control portion 22. The control portion 22 converts the inputted voltage signal into a digital signal, and the digitalized vibration signal is processed by Fourier transform for analyzing frequency. In the present embodiment, as shown in Figs. 4(B) and 4(C), the primary wave processed by Fourier transform represents a vibration signal wave of the piezoelectric vibrating unit 14 and secondary wave represents a drive signal wave outputted by the drive circuit 20. The amplitude, phase difference relative to the drive signal and resonance frequency of the obtained vibration signal wave are calculated (step S3 of Fig. 2) and are stored in the nonvolatile memory 30 (step S4 of Fig. 2).

The above measurement process of the resonance frequency (step S of Fig. 2) and the measurement process of the phase difference and the amplitude (steps S2 to S4 of Fig. 2) are automatically conducted based on a predetermined program. The amplitude of the piezoelectric vibrating unit 14 in driving at the resonance frequency is set by the vibration setting circuit 26.

After the above adjustment, when the parts feeder is actually operated for feeding parts, the mode setting circuit 28 switches the mode into the operation mode.

In the operation mode, the piezoelectric vibrator 16 is driven by the drive circuit 20 at the resonance frequency and amplitude stored in the nonvolatile memory 30 (step S5 of Fig. 2).

At this time, the drive circuit 20 is driven at a frequency f₂ doubling the normal drive frequency f for a predetermined period t as shown in Fig. 4(A) per a predetermined cycle, e.g. one time per fifty cycle. The voltage obtained by the piezoelectric vibrator 16 by piezoelectric effect is detected by the voltage sensor 24 and is outputted to the control portion 22. The control portion 22 converts the voltage wave obtained by the voltage sensor 24 from analog to digital wave during period t and processes the digitalized vibration signal by Fourier transform, thereby calculating phase difference between the obtained vibration signal of the bowl 12 (see Fig. 4(B)) and the drive signal wave as a vibrating force for driving the drive circuit 20 (step S6 of Fig. 2).

The control portion 22 controls the vibrating frequency of the piezoelectric vibrator 16 so that the phase difference between the vibration signal wave obtained by the piezoelectric vibrator 16 and the drive signal wave of the drive voltage of the drive circuit 20 becomes the phase value stored during the adjustment mode (step S7 of Fig. 2).

The control is continuously conducted by a predetermined interval while the piezoelectrically vibrating parts feeder 10 is in an operation mode. On the other hand, when the parts feeder 10 is switched to the adjustment mode, the above-described steps S1 to S4 are conducted.

According to the piezoelectrically vibrating parts feeder and control method thereof of the present embodiment, the mechanical vibration of the piezoelectric vibrator 16 can be accurately detected by the piezoelectric vibrator 16 itself as a signal detected during the period temporarily changing the drive frequency without using special sensor for detecting the amplitude and the detection signal can be sent to the control portion 22. The vibration signal can be easily and accurately obtained by Fourier transform, so that the drive can be accurately controlled by accurately detecting amplitude and phase. Further, since the piezoelectric vibrator 16 itself can work as a sensor, the arrangement can be simplified and the detection signal can be extremely accurate. Further, even when the drive frequency of the piezoelectric vibrator 16 is temporarily changed, the bowl 12 and the vibrating unit 14 are vibrated by inertia, so that there can be no influence on the operation of the piezoelectric vibrating unit 14.

Further, since the adjustment mode and the operation mode are switchable, and the most appropriate resonance frequency of the parts feeder 10 can be adjusted as necessary by the adjustment mode, so that the parts feeder 10 can be constantly driven at the most appropriate condition.

Incidentally, when the parts feeder 10 is self-excited type, accurate vibration can be achieved only by controlling frequency so that the phase of the voltage obtained by the piezoelectric vibrator 16 becomes the same phase as in measuring resonance frequency. When the parts feeder 10 is non-self-excited type, though a user sets a predetermined frequency, accurate resonance frequency control is possible by detecting the phase of the vibration voltage and the drive voltage of the piezoelectric vibrator.

Incidentally, the scope of the present invention is not restricted to the above embodiment but an electromagnetic vibration parts feeder using an electromagnet as a vibration element can be used instead of the vibrating parts feeder using a piezoelectric element.

Though normal frequency may preferably be the resonance frequency (natural frequency) of vibrating portion including the parts discharger or integral multiple thereof for efficiently applying vibration and for the convenience of continuing vibration during temporarily suspending application of vibration. However, other frequency may be used as long as the vibration can be obtained while suspending to apply vibration.

The temporary frequency is not restricted to the frequency doubling the normal frequency but may be other integral multiple or one divided by integral multiple of the normal frequency. Among them, a frequency of the normal frequency multiplied or divided by an even integer is preferable. According to such arrangement, the vibration of the vibrating portion including the parts discharger can be easily continued even while applying vibration by the normal frequency is suspended and phase can be easily compared.

There is no restriction to the temporarily converted frequency as long as vibration signal wave can be calculated by Fourier transform. Preferably, when the normal frequency is high, the temporary frequency is set at a frequency lower than the normal frequency and the normal frequency is relatively low, the temporary frequency is set high.

The parts feeder 10 can be driven in any manner. The electric current flowing through the piezoelectric vibrator or the electromagnet may be detected and processed by Fourier-transform to obtain vibration frequency for the same control as in the above without detecting voltage and induced electromotive force obtained by piezoelectric effect of the piezoelectric vibrator 16. The present invention can be applied not only to a parts feeder having a bowl but may be applied to any parts feeding unit using piezoelectric vibrator or electromagnet.

As described above, the present invention uses the vibration element itself as a sensor for accurately detecting vibration without using special vibration sensor for detecting amplitude of the vibration element. Further, the vibration element is temporarily driven by a different frequency and the actual vibration signal is obtained by analyzing frequency of the signal detected while the vibrating element is vibrated at the different frequency for drive control, thereby extremely simply controlling drive of the vibrating element. The resonance frequency of the parts feeder is once measured and stored and the parts feeder is operated based on the stored resonance frequency and other data such as other signal and phase difference, so that the respective parts feeders can be driven at the most appropriate drive condition. Further, even when the arrangement of the parts feeder is changed, the resonance frequency can be re-measured, so that the parts feeder can be driven constantly under the most suitable condition.

## Claims

1. A parts feeder (10) including: a vibration element (16) for vibrating a parts discharger (12); a drive circuit (20) for driving the vibration element (16); and a control portion (22) for sending drive signal of a predetermined drive frequency to the drive circuit (20) to vibrate the vibration element (16) at the drive frequency, **characterized in that**
the control portion (22) ordinarily uses the drive frequency as a normal frequency and changes the drive frequency to a temporary frequency different from the normal frequency per a predetermined operation cycle.

2. The parts feeder according to claim 1,
wherein the control portion (22) detects a signal outputted by the vibration element (16) continuously vibrated by inertia during drive period at the temporary frequency and compares the detected signal with a drive signal outputted by the control portion (22), based on which the vibration of the vibration element (16) is controlled.

3. The parts feeder according to claim 2,
wherein the control portion (22) has a signal sensor (31) for detecting a signal outputted by the vibration element (16) continuously vibrated by inertia, a phase difference sensor (32) for detecting a phase difference between a vibration signal wave obtained by the signal sensor and a drive signal wave from the drive circuit (20), and a vibration controller (33) for controlling the vibration of the vibration element (16) based on the phase difference obtained by the phase difference sensor.

4. The parts feeder according to claim 1,
wherein the temporary frequency is the normal frequency multiplied or divided by integer.

5. The parts feeder according to claim 1,
wherein the normal frequency is a resonance frequency of a vibrating portion including the parts discharger (12) and the vibration element (16) or integral multiple thereof.

6. A control method of a parts feeder (10) including: a vibration element (16) for vibrating a parts discharger (12); a drive circuit (20) for driving the vibration element (16); and a control portion (22) for sending drive signal of a predetermined drive frequency to the drive circuit (20) to vibrate the vibration element (16) at the drive frequency, **characterized in that**
the drive frequency is ordinarily used as a normal frequency and the drive frequency is changed to a temporary frequency different from the normal frequency per a predetermined operation cycle.

7. The control method of parts feeder according to claim 6,
wherein a signal outputted by the vibration element (16) continuously vibrated by inertia is detected during drive period at the temporary frequency and the detected signal is compared with a drive signal outputted by the control portion (22), based on which the vibration of the vibration element (16) is controlled.

8. The control method of parts feeder according to claim 7,
wherein a phase difference between a wave of the detected signal and wave of the drive signal wave is calculated and the vibration of the vibration element is controlled (16) so that the phase difference becomes a predetermined value.

9. The control method of parts feeder according to claim 6,
wherein the temporary frequency is the normal frequency multiplied or divided by integer.

10. The control method of parts feeder according to claim 6,
wherein the normal frequency is a resonance frequency of a vibrating portion including the parts discharger (12) and the vibration element (16) or integral multiple thereof.
